# EUROPÄISCHE PATENTSCHRIFT

(11) **EP 2 166 319 B1**
(45) Veröffentlichungstag und Bekanntmachung des Hinweises auf die Patenterteilung: **18.05.2016**
(21) Anmeldenummer: 09163661.3
(22) Anmeldetag: 04.09.2008
(51) Int. Cl.: G01F 23/284, G01S 7/03, G01S 7/282

(54) **Variable Sendeleistung für die Füllstandmessung**
Variable transmission output for fill state measurement
Puissance d'émission variable pour la mesure du niveau de remplissage

(43) Veröffentlichungstag der Anmeldung: 24.03.2010
(62) Teilanmeldung aus: 08163708.4
(73) Patentinhaber: VEGA Grieshaber KG, 77709 Wolfach (DE)
(72) Erfinder: Müller, Christoph, 77728, Oppenau (DE); Corbe, Bernhard, 77746, Schutterwald (DE); Fischer, Michael, 77709, Wolfach (DE); Schultheiss, Daniel, 78132, Hornberg (DE)
(74) Vertreter: Maiwald Patentanwalts GmbH

(56) Entgegenhaltungen:
- WO-A-02/14902
- DE-A1- 2 942 541
- DE-A1-102005 057 094
- GB-A- 2 307 809
- US-A1- 2007 101 810
- DISKUS CH G: "MIKROWELLENSENSORIK. ÖMICROWAVE SENSING" ELEKTROTECHNIK UND INFORMATIONSTECHNIK, SPRINGER VERLAG, WIEN, AT, Bd. 113, Nr. 7/08, 1. Juli 1996 (1996-07-01), Seiten 500-512, XP000633390 ISSN: 0932-383X

## Beschreibung

### Gebiet der Erfindung

Die Erfindung betrifft die Füllstandsmessung. Insbesondere betrifft die Erfindung die Verwendung eines Elektronikmodul zur Füllstandsmessung sowie ein Verfahren zum Ändern einer Sendeleistung eines Sendesignals.

### Technologischer Hintergrund

Bekannte Füllstandsmessgeräte für berührungslose Messung weisen eine Antenne auf, welche Signale (Radar- oder Mikrowellen, Ultraschall) aussendet bzw. empfängt, um den Füllstand eines Mediums z. B. in einem Füllgutbehälter zu ermitteln. Die Antenne eines solchen Füllstandsmessgeräts ist dabei beispielsweise innerhalb des Behälters angeordnet.

Die Qualität der empfangenen Messsignale bei einer Füllstandsmessung mit einem Füllstandsmessgerät hängt dabei stark von der Qualität der Sende-/Empfangseinheit ab. Insbesondere ist hier die Stärke bzw. Amplitude des Empfangssignals kritisch. Ist die Amplitude klein, beispielsweise weil das Messsignal auf seinem Weg vom

Sender zum Füllgut und zurück stark gedämpft wurde oder das Füllgut nur schlecht reflektiert, leidet die Qualität der Signalauswertung und somit das Messergebnis. Ist auf der anderen Seite die Amplitude des empfangenen Signals zu hoch, übersteuert die Empfangseinheit oft. Dies führt dann zu einer Fehlmessung.

Aus der DE 10 2005 057 094 A1 ist es bekannt, die Sendeleistung zur Messung eines Füllstands zu variieren, indem zwischen zwei verschiedenen Oszillatoren, also zwei verschiedenen Quellen zur Erzeugung von Sendesignalen, die jeweils verschiedene Sendeleistungen aufweisen, geschaltet wird.

Alternativ hierzu kann ein Hochfrequenz-Verstärker über eine Steuereinheit entsprechend gesteuert werden.

### Zusammenfassung der Erfindung

Es ist eine Aufgabe der Erfindung, eine einfache Steuerung einer Sendeleistung eines Sendesignals für ein Füllstandsmessgerät anzugeben.

Es sind die Verwendung eines Elektronikmoduls zur Füllstandsmessung sowie ein Verfahren zum Ändern einer Sendeleistung eines Sendesignals gemäß den Merkmalen der unabhängigen Ansprüche angegeben. Weiterbildungen der Erfindung ergeben sich aus den Unteransprüchen.

Die beschriebenen Ausführungsbeispiele betreffen das Elektronikmodul, das Füllstandsradar, die Verwendung und das Verfahren. In anderen Worten lassen sich die im Folgenden im Hinblick auf das Elektronikmodul beschriebenen Ausführungsbeispiele in den Füllstandsradar, der Verwendung und dem Verfahren implementieren, und umgekehrt.

Gemäß einem Beispiel ist ein Elektronikmodul für ein Füllstandsradar zum Ändern einer Sendeleistung eines Sendesignals, das zur Füllstandsmessung eingesetzt wird und eine Frequenz von über 20 GHz aufweist, angegeben. Das Elektronikmodul weist eine Quelle zum Erzeugen des Sendesignals, einen Hochfrequenz-Verstärker zum Verstärken der Sendeleistung des Sendesignals und einen ersten Signalschalter zum Schalten des Sendesignals, nachdem es von der Quelle erzeugt ist, von einer ersten Sendeleistung auf eine zweite Sendeleistung auf. Mehrere Signalquellen zum Erzeugen von Sendesignalen mit unterschiedlichen Leistungen sind nicht erforderlich. Es ist zu beachten, dass das Elektronikmodul für Frequenzen über 20 GHz, beispielsweise bei 26 GHz oder im Bereich zwischen 70 und 110 GHz, einsetzbar ist. In diesem Frequenzbereich wäre der bloße Einsatz eines herkömmlichen variablen Verstärkers (eines sog. Variable Gain Amplifiers, VGA) nicht vorteilhaft. Kommerziell erhältliche VGA weisen in diesem Frequenzbereich eine Verstärkungsänderung von lediglich ca. 10 bis 15 dB auf. Wünschenswert sind allerdings Verstärkungsänderungen von ca. 30dB.

Zu beachten ist, dass das Elektronikmodul sowohl für die erste als auch die zweite Sendeleistung ähnliche Signalformen ausgibt, so dass die beiden Sendesignale ohne umfangreiche Aufbereitung wahlweise zur Messung eines Füllstands verwendbar sind.

Gemäß einem weiteren Beispiel ist der Hochfrequenz-Verstärker als Transistor ausgeführt, wobei der erste Signalschalter zum Zuschalten und zum Abschalten einer Drain-Spannung des Transistors ausgeführt ist.

In anderen Worten bleibt die Gatespannung unverändert. Soll die Leistung des Sendesignals reduziert werden, wird die Drain-Spannung abgeschaltet.

Der Vorteil gegenüber einer Reduzierung der Sendeleistung durch ein Dämpfungsglied mit variabler Dämpfung liegt u. a. darin, dass bei kleiner Sendeleistung auch weniger Energie verbraucht wird.

Gemäß einem weiteren Beispiel ist der Hochfrequenz-Verstärker als Feldeffekt-Transistor oder als Bipolartransistor ausgeführt. Der erste Signalschalter liegt beispielsweise in der Zuleitung zum Drain-Eingang des Verstärkers.

Gemäß einem weiteren Beispiel ist der Hochfrequenz-Verstärker als eine monolithische integrierte Schaltung für Mikrowellen (Monolithic Microwave Integrated Circuit, MMIC) ausgeführt.

Gemäß einem weiteren Beispiel weist das Elektronikmodul weiterhin einen zweiten Signalschalter auf, der parallel zum ersten Signalschalter schaltet und angesteuert wird.

Gemäß einem weiteren Beispiel weist das Elelctronikmodul eine erste Umwegleitung zum Umgehen des Hochfrequenz-Verstärkers auf, wobei der erste Signalschalter zum Schalten zwischen dem Hochfrequenz-Verstärker und der ersten Umwegleitung ausgeführt ist.

In anderen Worten muss der Verstärker nicht abgeschaltet werden, um die Verstärkung zu verringern, sondern der Verstärker wird über die Umwegleitung umgangen. Auf diese Weise wird vermieden, dass sich die Eingangs- und Ausgangsanpassungen des Elektronikmoduls durch das Abschalten des Hochfrequenz-Verstärkers über eine Betriebsspannung ändern. Auf diese Weise kann die Pulsform der Mikrowellenpulse (Sendesignale) weitgehend konstant gehalten werden.

Gemäß einem weiteren Beispiel weist das Elektronikmodul eine zweite Umwegleitung auf. Weiterhin ist ein dritter Signalschalter vorgesehen, der zum Schalten zwischen der ersten Umwegleitung und der zweiten Umwegleitung dient.

Die beiden Umwegleitungen können verschiedene Dämpfungen aufweisen, so dass also drei verschiedene Sendeleistungen durch bloße Betätigung der Schalter zur Verfügung stehen.

Gemäß einem weiteren Beispiel ist ein Dämpfungselement vorgesehen, das in der ersten Umwegleitung oder in der zweiten Umwegleitung angeordnet ist.

Beispielsweise kann es sich hier um ein variables Dämpfungselement handeln, das zum Dämpfen des Sendesignals mit einer steuerbaren oder sogar regelbaren Dämpfung ausgeführt ist.

Beispielsweise ist das Dämpfungselement als eine auf ein Substrat aufgeklebte Dämpfungsmatte ausgeführt. Das Dämpfungselement muss also nicht in die Umwegleitung integriert sein, sondern kann vielmehr auf der Leitung angebracht sein. Durch die Änderung der Größe, Dicke oder eines anderen Parameters der Dämpfungsmatte kann der Dämpfungsfaktor entsprechend eingestellt werden, je nach Anforderung an das Füllstandsmessgerät.

Durch die Steuerung der Dämpfung ist diese je nach Anforderungen individuell einstellbar. Wenn also die Leistung des Sendesignals zu groß ist, obgleich der Verstärker schon umgangen ist oder die Drain-Spannung abgeschaltet ist, kann die Sendeleistung weiter verringert werden.

Gemäß einem weiteren Beispiel ist der Hochfrequenz-Verstärker zum Verstärken des Sendesignals mit einer steuerbaren oder sogar regelbaren Verstärkung ausgeführt. Die Änderung der Verstärkung wird durch ein Ändern der Drain-Spannung (also der Betriebsspannung) erzielt.

Gemäß einem weiteren Beispiel weist das Elektronikmodul weiterhin eine Steuereinheit zum Steuern des Signalschalters oder der Signalschalter, der Dämpfung des Dämpfungselements und/oder der Verstärkung des Hochfrequenz-Verstärkers auf.

Auch können mehrere einzelne Steuereinheiten vorgesehen sein, welche die verschiedenen Elemente individuell ansteuern.

Gemäß einem weiteren Beispiel ist ein Füllstandsradar mit einem oben beschriebenen Elektronikmodul angegeben. Das Füllstandsradar ist beispielsweise als Pulsradarsystem ausgeführt.

Gemäß einem weiteren Beispiel umfasst das Füllstandsradar eine Empfangseinheit, wobei die Steuereinheit mit der Empfangseinheit gekoppelt ist und wobei die Steuereinheit zum Steuern des Elektronikmoduls derart ausgeführt ist, dass die zweite, geringere Sendeleistung dann eingeschaltet wird, wenn die Stärke des Empfangssignals einen voreingestellten Schwellwert übersteigt.

Auf diese Weise können Testmessungen durchgeführt werden, um ein Gefühl dafür zu bekommen, ob die empfangene Leistung in einem akzeptablen, günstigen Bereich liegt. Übersteigt die empfangene Signalstärke einen oberen Schwellwert, kann beispielsweise die Leistung zurückgeschaltet werden, indem der Verstärker umgangen wird. Auf der anderen Seite, wenn beispielsweise das Empfangssignal eine Stärke aufweist, welche unterhalb einem zweiten Schwellwert liegt, kann die Leistung des Sendesignals durch eine Zuschaltung des Verstärkers erhöht werden.

Gemäß einem weiteren Beispiel erfolgt der Empfang, die Leistungsbestimmung und der Vergleich mit dem Schwellwert der Empfangssignale automatisch.

Beispielsweise können derartige Signalstärkemessungen in regelmäßigen Abständen automatisch vorgenommen werden. Somit kann eine weitgehend kontinuierliche Regelung der Sendeleistung erfolgen, welche jeweils auf die äußeren Bedingungen angepasst ist.

Gemäß einem Ausführungsbeispiel der Erfindung ist die Verwendung eines oben beschriebenen Elektronikmoduls zur Füllstandsmessung angegeben. Gemäß einem weiteren Ausführungsbeispiel der Erfindung ist ein Verfahren zum Ändern einer Sendeleistung eines Sendesignals angegeben, das zur Füllstandsmessung eingesetzt wird. Bei dem Verfahren wird zunächst ein Sendesignal erzeugt. Daraufhin erfolgt eine Verstärkung der Sendeleistung des Sendesignals auf eine verstärkte Sendeleistung durch einen Verstärker. Falls die Sendeleistung zu groß ist, erfolgt ein Schalten des Sendesignals, nachdem es erzeugt ist, von der verstärkten Sendeleistung auf eine zweite, geringere Sendeleistung. Hierfür wird beispielsweise der Signalpfad geändert, so dass das Sendesignal nicht mehr durch den Verstärker läuft, sondern den Verstärker umgeht. Auch kann das Schalten ein Abschalten der Drainspannung des Verstärkers umfassen. Mehrere Signalquellen sind hierfür nicht erforderlich.

Gemäß einem weiteren Ausführungsbeispiel der Erfindung ist ein Programmelement angegeben, das, wenn es auf einem Prozessor ausgeführt wird, den Prozessor anleitet, die oben angegebenen Verfahrensschritte durchzuführen.

Dabei kann das Programmelement z. B. Teil einer Software sein, die auf einem Prozessor des Füllstandsmessgeräts gespeichert ist. Der Prozessor kann dabei ebenso Gegenstand der Erfindung sein. Weiterhin umfasst dieses Ausführungsbeispiel der Erfindung ein Programmelement, welches schon von Anfang an die Erfindung verwendet, sowie auch ein Computerprogrammelement, welches durch eine Aktualisierung (Update) ein bestehendes Programm zur Verwendung der Erfindung veranlasst.
Gemäß einem weiteren Ausführungsbeispiel der Erfindung ist ein computerlesbares Medium angegeben, auf dem ein Programmelement gespeichert ist, das, wenn es auf einem Prozessor ausgeführt wird, den Prozessor anleitet, die oben angegebenen Verfahrensschritte durchzuführen.

Im Folgenden werden mit Verweis auf die Figuren Beispiele beschrieben. Kurze Beschreibung der Figuren
Fig. 1A zeigt ein Blockschaltbild eines Elektronikmoduls
Fig. 1B zeigt ein Blockschaltbild eines Elektronikmoduls
Fig. 1C zeigt ein Blockschaltbild eines Elektronikmoduls
Fig. 2 zeigt ein Blockschaltbild eines Elektronikmoduls Fig. 3 zeigt ein Blockschaltbild eines Elektronikmoduls
Fig. 4 zeigt ein Blockschaltbild eines Elektronikmoduls
Fig. 5 zeigt ein Blockschaltbild eines Elektronikmoduls
Fig. 6 zeigt ein Blockschaltbild eines Elektronikmoduls.
Fig. 7 zeigt ein Füllstandsradar
Fig. 8 zeigt ein Flussdiagramm eines Verfahrens gemäß einem Ausführungsbeispiel der Erfindung.
Fig. 9 zeigt ein Blockschaltbild eines Elektronikmoduls.

### Detaillierte Beschreibung von Ausführungsbeispielen

Die Darstellungen in den Figuren sind schematisch und nicht maßstäblich. In der folgenden Figurenbeschreibung werden für die gleichen oder ähnlichen Elemente die gleichen Bezugsziffern verwendet.

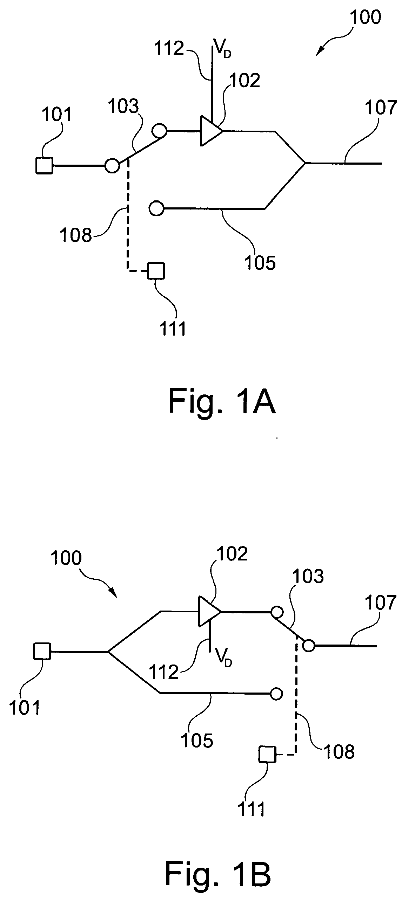

Fig. 1A zeigt ein Blockschaltbild eines Elektronikmoduls 100, welches einen Signalschalter 103 sowie eine Umwegleitung 105 aufweist. Es ist eine Signalquelle 101 vorgesehen, die das Sendesignal erzeugt. Abhängig von der gewünschten Sendeleistung am Ausgang 107 des Elektronikmoduls 100 wird der Signalschalter 103 entweder so geschaltet, dass die Umwegleitung 105 zum Leiten des Sendesignals oder (wie gezeigt) der obere Signalpfad verwendet wird.

Im oberen Signalpfad ist ein Hochfrequenz-Verstärker 102 eingebaut, der zur Verstärkung der Leistung des Sendesignals dient. Dieser Verstärker 102 wird über eine Drain-Spannung V_{D}112 versorgt.

Der Signalschalter 103 wird über die Steuereinheit 111 und die Steuerleitung 108 angesteuert bzw. geschaltet.

Auf diese Weise kann also die Leistung des Sendesignals am Ausgang des Elektronikmoduls 107 verändert werden, ohne dass sich dabei die Signalform wesentlich ändert.

Fig. 1B zeigt ein Blockschaltbild eines weiteren Ausführungsbeispiels des Elektronikmoduls 100, bei dem der Signalschalter 103 nicht auf der Eingangsseite des Verstärkers 102, sondern auf seiner Ausgangsseite angeordnet ist.

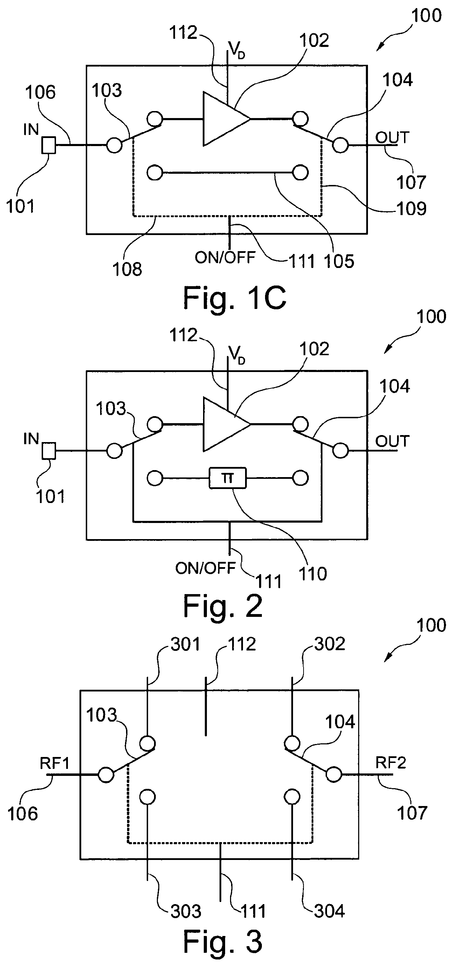

Fig. 1C zeigt ein weiteren Ausführungsbeispiel des Elektronikmoduls 100, bei dem zwei Signalschalter 103, 104 vorgesehen sind, die jeweils auf der Eingangsseite bzw. der Ausgangsseite des Hochfrequenz-Verstärkers 102 angeordnet sind.

Der erste Signalschalter 103 schließt sich unmittelbar an die Zuleitung 106 von der Quelle 101 an und wird über die Leitung 108, die mit der Steuereinheit 111 verbunden ist, angesteuert. Der zweite Signalschalter 104, der mit dem Ausgang 107 des Elektronikmoduls verbunden ist, wird über die Steuerleitung 109, die mit der Steuereinheit 111 verbunden ist, angesteuert.

In der Umwegleitung 105 kann eine zusätzliche Dämpfung 110 vorgesehen sein. Dies ist beispielsweise in Fig. 2 gezeigt.

Die beiden Signalschalter 103, 104 sind als Umschalter ausgeführt. Damit ist es möglich, das Hochfrequenz-Signal am Verstärker 102 vorbeizuleiten. In diesem Fall kann dann der Verstärker 102 auch abgeschaltet werden, so dass Strom gespart werden kann. Dies gilt für alle beschriebenen Ausführungsbeispiele der Figuren 1A, 1B, 1C, 2, 3, 4, 5.

Wie in Fig. 3 gezeigt, ist es auch möglich, den Hochfrequenz-Verstärker 102, das Dämpfungsglied 110 und die Schalter 103, 104 zu trennen. Der Hochfrequenz-Verstärker 102 (nicht gezeigt in Fig. 3) ist in diesem Fall mit den Leitungen 301, 302 verbunden. Die Umwegleitung (ggf. mit dem Dämpfungsglied 110) ist in diesem Fall mit den Leitungen 303, 304 verbunden.

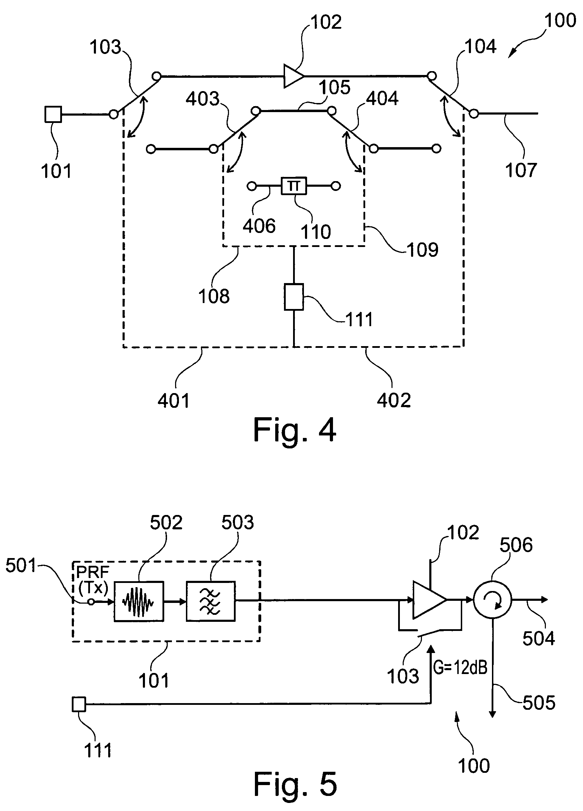

RF1 bezeichnet die Zuleitung von der Quelle 101 zum ersten Schalter 103. RF2 bezeichnet den Ausgang, also die Leitung 107, vom zweiten Schalter 104 zur Antenne bzw. einer vorgeschalteten Abzweigung, beispielsweise einem Zirkulator 506 (siehe Fig. 5).

Über die Control-Pin des in der Fig. 3 gezeigten Bausteins können die Schalter 103, 104 gemeinsam angesteuert werden. Auch ist es möglich, zwei getrennte Schalterbausteine vorzusehen, die mit getrennten Control-Pins ausgeführt sind und somit getrennt voneinander angesteuert werden können.

Fig. 4 zeigt ein eines Elektronikmodul 100 mit vier Signalschaltern 103, 104, 403, 404. Die möglichen Schaltvorgänge sind durch die vier Doppelpfeile symbolisiert.

Wie in Fig. 4 zu sehen ist es also möglich, den Verstärker 102 über die Ansteuerungen 401, 402 der Schalter 103, 104 zuzuschalten bzw. zu umgehen. Weiterhin ist es möglich, über die Ansteuerungsleitungen 108, 109 zwischen einer bloßen Umgehungs- bzw. Umwegleitung 105 und einer Umwegleitung 406 mit einem Dämpfungselement 110 zu schalten, je nach gewünschter Ausgangssendeleistung.
Gesteuert werden sämtliche Schalter über die Steuereinheit 111.
Auch kann die Steuereinheit 111 zur Steuerung des Dämpfungsglieds 110 (falls dieses eine variable Dämpfung aufweist) oder zur Steuerung der Drain-Spannung (beispielsweise Zuschalten bzw. Wegschalten der Quellen-Spannung) ausgeführt sein.

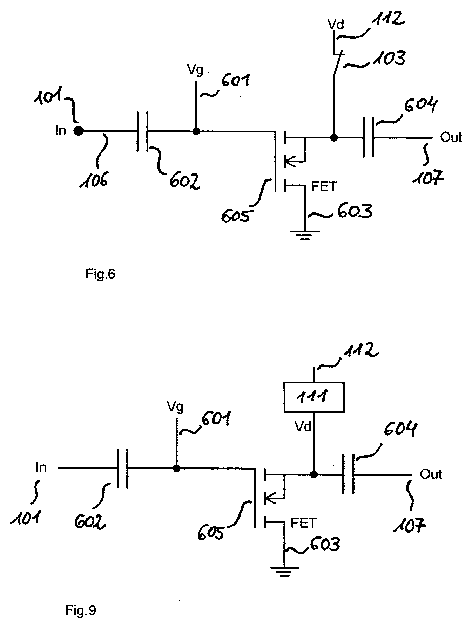

Fig. 5 zeigt ein Prinzipschaltbild des Elektronikmoduls 100, welches eine Sendestufe mit einem sog. PRF-Oszillator 501, 502, einen Filter 503 (Quelle 101), einen Hochfrequenz-Verstärker 102 mit einer Umwegleitung mit Schalter 103 sowie einen Zirkulator 506 aufweist.
Das Sendesignal wird über die Leitung 504 vom Zirkulator 506 an die Antenne des Füllstandsmessgeräts geleitet. Das Empfangssignal läuft von der Antenne (nicht dargestellt in Fig. 5) zurück zum Zirkulator 506 und dann über die Leitung 505 zum Empfänger.
Über die Steuereinheit 111 kann die Sendeleistung umgeschaltet werden.
Weiterhin ist es möglich, die Versorgungsspannung des Hochfrequenz-Verstärkers 102 abzuschalten. Im Falle eines Feldeffekttransistor-Verstärkers ist ein beispielhaftes Schaltbild in Fig. 6 gezeigt, in welchem die Verstärkeranordnung zu sehen ist.

Der Feldeffekttransistor 605 wird mittels der Gatespannung 601 V_{g} in einen passenden Arbeitspunkt geschoben. Das Ein- und Ausschalten der Betriebsspannung wird nun nur durch Zu- bzw. Abschalten der Drain-Spannung 112 V_{d} mit Hilfe des Signalschalters 103 vollzogen. Die Gatespannung bleibt beispielsweise immer unverändert. Dadurch verändert sich die Eingangsanpassung der Verstärkeranordnung nicht oder nur unwesentlich. Auf diese Weise sind Pegelunterschiede von 25 bis 30 dB möglich. Eine Umwegleitung ist nicht erforderlich, kann aber trotzdem zusätzlich eingesetzt werden.

Die Bezugszeichen 602, 604 bezeichnen Kondensatoren am Eingang bzw. am Ausgang des Feldeffekttransistors. Der dritte Anschluss des Feldeffekttransistors ist mit der Schaltungsmasse verbunden (siehe Bezugszeichen 603).

Die gleiche Lösung ergibt sich bei MMIC-Verstärkern. In aller Regel haben diese Bausteine auch einen Gate-Spannungsanschluss und einen Drain-Spannungsanschluss. Bei der Änderung der Sendeleistung bleibt die Gatespannung stets eingeschaltet. Auf diese Weise ist es möglich, eine Änderung der Verstärkung zu erreichen, ohne die Eingangsanpassung zu verändern.

In einem gewissen Bereich kann durch die Variation der Gatespannung außerdem die Dämpfung im abgeschalteten Zustand bzw. die Verstärkung im eingeschalteten Zustand eingestellt werden.

Das Elektronikmodul kann (im Allgemeinen ohne die Quelle) als MMIC integriert sein oder mit einzelnen Komponenten aufgebaut sein. Die Signalschalter können einzeln angesprochen werden (mit Hilfe getrennter Steueranschlüsse), oder gemeinsam.

Weiterhin kann der Verstärker entweder über die Betriebsspannung als auch über einen Shut-Down-Steueranschluss ein- und ausgeschaltet werden. Dies kann gleichzeitig mit den Signalumschaltern erfolgen, oder auch unabhängig davon.

Auch kann die Dämpfung in der Umwegleitung variabel sein. Weiterhin kann der Verstärker als Variable Gain Amplifier (VGA) ausgeführt sein.

Im Falle des Ein- oder Abschaltens der Versorgungsspannung kann ein Einzel-FET, ein Bipolartransistor oder ein MMIC eingesetzt werden.

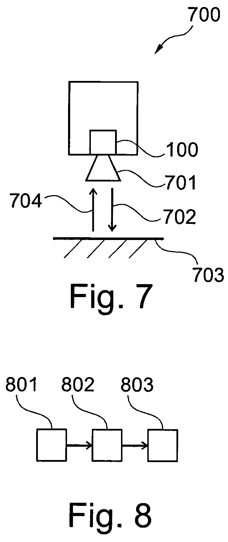

Fig. 7 zeigt ein Füllstandsradar 700, das ein Elektronikmodul 100 und eine Antenne 701 aufweist. Die Antenne dient dem Aussenden des Sendesignals 702 in Richtung Füllgutoberfläche 703 und dem Empfang eines daran reflektierten Empfangssignals 704.

Fig. 8 zeigt ein Flussdiagramm eines Verfahrens, bei dem in Schritt 801 ein Sendesignal erzeugt wird. In Schritt 802 wird die Sendeleistung des Sendesignals durch einen Hochfrequenz-Verstärker verstärkt. In Schritt 803 wird von der verstärkten Sendeleistung auf eine geringere Sendeleistung umgeschaltet, indem entweder eine Umwegleitung genutzt wird oder die Drain-Spannung des Verstärkers mit Hilfe eines Signalschalters gekappt wird.

Fig. 9 zeigt ein Schaltbild einer Anordnung, bei der die Steuereinheit 111 die Drainspannung variiert. Die Gatespannung liegt dabei konstant an. Durch Variation der Drainspannung lässt sich die Verstärkung des Verstärkers beeinflussen. Mit dieser Anordnung lassen sich auch Zwischenwerte zwischen den beiden Verstärkerzuständen Ein und Aus (Drainspannung Ein bzw. Aus) erzielen. Ein Signalschalter ist hierfür nicht erforderlich, kann aber trotzdem vorgesehen sein (so wie in Fig. 6). Die Steuerung kann beispielsweise mittels D/A-Wandler durch einen Mikrocontroller erfolgen. Hiermit ergibt sich eine feine Verstärkungsabstufung bzw. eine kontinuierliche Verstärkungsregelung.

Eine Nichtlinearität zwischen Verstärkung und Drainspannung kann mittels einer gespeicherten Referenzkurve durch den Mikrocontroller korrigiert werden. Ebenso kann eine bekannte Temperaturdrift durch den Mikrocontroller korrigiert werden.

Ergänzend ist darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verwendung eines Elektronikmoduls zur Füllstandmessung, wobei das Elektronikmodul zum Ändern einer Sendeleistung eines Sendesignals mit einer Sendesignalsfrequenz von über 20 GHz ausgeführt ist, das Elektronikmodul (100) aufweisend:
eine Quelle (101) zum Erzeugen des Sendesignals;
einen Hochfrequenz-Verstärker (102) zum Verstärken der Sendeleistung des Sendesignals;
einen ersten Signalschalter (103) zum Schalten des Sendesignals, nachdem es von der Quelle (101) erzeugt ist, von einer ersten Sendeleistung auf eine zweite Sendeleistung;
wobei der Hochfrequenz-Verstärker (102) als Feldeffekt-Transistor oder als monolithische integrierte Schaltung für Mikrowellen (MMIC) ausgeführt ist;
wobei der erste Signalschalter (103) zum Zuschalten und Abschalten einer Drain-Spannung des Hochfrequenz-Verstärkers bei angeschalteter Gate-Spannung ausgeführt ist.

2. Verwendung des Elektronikmoduls zur Füllstandmessung nach Anspruch 1, wobei die Gatespannung des Hochfrequenz-Verstärkers des Elektronikmoduls während des Betriebes des Hochfrequenz-Verstärkers unverändert bleibt.

3. Verwendung des Elektronikmoduls zur Füllstandmessung nach einem der vorhergehenden Ansprüche, das Elektronikmodul weiterhin aufweisend:
einen zweiten Signalschalter (104), der parallel zum ersten Signalschalter (103) schaltet.

4. Verwendung des Elektronikmoduls zur Füllstandmessung nach einem der vorhergehenden Ansprüche, das Elektronikmodul weiterhin aufweisend:
eine erste Umwegleitung (105) zum Umgehen des Hochfrequenz-Verstärkers (102);
wobei der erste Signalschalter (103) zum Schalten zwischen dem Hochfrequenz-Verstärker (102) und der ersten Umwegleitung ausgeführt ist.

5. Verwendung des Elektronikmoduls zur Füllstandmessung nach einem der vorhergehenden Ansprüche, das Elektronikmodul weiterhin aufweisend:
eine zweite Umwegleitung (406);
einen dritten Signalschalter (403) zum Schalten zwischen der ersten Umwegleitung (105) und der zweiten Umwegleitung (406).

6. Verwendung des Elektronikmoduls zur Füllstandmessung nach einem der vorhergehenden Ansprüche, das Elektronikmodul weiterhin aufweisend:
ein Dämpfungselement (110), das in der ersten Umwegleitung (105) oder in der zweiten Umwegleitung (406) angeordnet ist.

7. Verwendung des Elektronikmoduls zur Füllstandmessung nach einem der vorhergehenden Ansprüche,
wobei der Hochfrequenz-Verstärker (102) zum Verstärken des Sendesignals mit einer steuerbaren Verstärkung ausgeführt ist.

8. Verwendung des Elektronikmoduls zur Füllstandmessung nach einem der vorhergehenden Ansprüche, das Elektronikmodul weiterhin aufweisend:
eine Steuereinheit (111) zum Steuern der Signalschalter (103, 104, 403, 404), der Dämpfung des Dämpfungselements oder der Verstärkung des Hochfrequenz-Verstärkers (102).

9. Verfahren zum Ändern einer Sendeleistung eines Sendesignals, das zur Füllstandmessung eingesetzt wird, das Verfahren aufweisend die Schritte:
Erzeugen des Sendesignals mit einer Sendesignalfrequenz von über 20 GHz;
Verstärken der Sendeleistung des Sendesignals auf eine verstärkte Sendeleistung durch einen Hochfrequenz-Verstärker;
Schalten des Sendesignals, nachdem es erzeugt ist, von der verstärkten Sendeleistung auf eine zweite, geringere Sendeleistung durch Abschalten einer Drain-Spannung des Hochfrequenz-Verstärkers bei angeschalteter Gate-Spannung.

10. Programmelement, das, wenn es auf einem Prozessor eines Füllstandradars ausgeführt wird, den Prozessor anleitet, das Verfahren gemäß Anspruch 9 durchzuführen.

11. Computerlesbares Medium auf dem das Programmelement gemäß Anspruch 10 gespeichert ist.

## Claims

1. Use of an electronics module for fill level measurement, wherein the electronics module is designed for varying a transmission power of a transmitting signal with a transmitting signal frequency above 20 GHz, the electronics module (100) comprising:
a source (101) for generating the transmitting signal;
a high-frequency amplifier (102) for amplifying the transmission power of the transmitting signal;
a first signal switch (103) for switching the transmitting signal, after it has been generated by the source (101), from a first transmission power to a second transmission power;
wherein the high-frequency amplifier (102) is designed as a field effect transistor or as a monolithic microwave integrated circuit (MMIC);
wherein the first signal switch (103) is designed for switching on and switching off a drain voltage of the high-frequency amplifier when a gate voltage is switched on.

2. Use of the electronics module for fill level measurement according to claim 1,
wherein the gate voltage of the high-frequency amplifier of the electronics module remains unchanged during the operation of the high-frequency amplifier.

3. Use of the electronics module for fill level measurement according to any one of the preceding claims, the electronics module further comprising:
a second signal switch (104) that switches parallel to the first signal switch (103).

4. Use of the electronics module for fill level measurement according to any one of the preceding claims, the electronics module further comprising:
a first detour line (105) for bypassing the high-frequency amplifier (102);
wherein the first signal switch (103) is designed for switching between the high-frequency amplifier (102) and the first detour line.

5. Use of the electronics module for fill level measurement according to any one of the preceding claims, the electronics module further comprising:
a second detour line (406);
a third signal switch (403) for switching between the first detour line (105) and the second detour line (406).

6. Use of the electronics module for fill level measurement according to any one of the preceding claims, the electronics module further comprising:
an attenuation element (110) which is arranged in the first detour line (105) or in the second detour line (406).

7. Use of the electronics module for fill level measurement according to any one of the preceding claims,
wherein the high-frequency amplifier (102) is designed to amplify the transmitting signal with a controllable amplification.

8. Use of the electronics module for fill level measurement according to any one of the preceding claims, the electronics module further comprising:
a control unit (111) for controlling the signal switches (103, 104, 403, 404), for attenuating the attenuation element, or for amplifying the high-frequency amplifier (102).

9. A method for varying a transmission power of a transmitting signal, which is used for fill level measurement, the method comprising the steps of:
generating the transmitting signal with a transmitting signal frequency of more than 20 GHz;
amplifying the transmission power of the transmitting signal to an amplified transmission power by means of an amplifier;
switching the transmitting signal, after it has been generated, from the amplified transmission power to a second, lower, transmission power by switching off a drain voltage of the high-frequency amplifier when a gate voltage is switched on.

10. A program element which, when executed on a processor, instructs the processor to carry out the method according to claim 9.

11. A computer-readable medium on which the program element according to claim 10 is stored.

## Revendications

1. Utilisation d'un module électronique pour la mesure de niveau, le module électronique étant réalisé pour modifier une puissance d'émission d'un signal émetteur d'une fréquence de plus de 20 GHz, le module électronique (100) comprenant :
une source (101) pour générer le signal émetteur ;
un amplificateur à haute fréquence (102) pour amplifier la puissance d'émission du signal émetteur ;
un premier commutateur de signal (103) pour commuter le signal émetteur, après sa génération par la source (101), d'une première puissance d'émission à une seconde puissance d'émission ;
l'amplificateur à haute fréquence (102) étant réalisé sous forme de transistor à effet de champ ou sous forme de circuit intégré monolithique hyperfréquence (MMIC) ;
le premier commutateur de signal (103) étant réalisé pour connecter et déconnecter une tension de drain de l'amplificateur à haute fréquence en présence d'une tension de grille connectée.

2. Utilisation du module électronique pour la mesure de niveau selon la revendication 1,
la tension de grille de l'amplificateur à haute fréquence du module électronique restant inchangée pendant le fonctionnement de l'amplificateur à haute fréquence.

3. Utilisation du module électronique pour la mesure de niveau selon l'une des revendications précédentes, le module électronique comprenant en outre :
un deuxième commutateur de signal (104), monté en parallèle du premier commutateur de signal (103).

4. Utilisation du module électronique pour la mesure de niveau selon l'une des revendications précédentes, le module électronique comprenant en outre :
une première ligne de détour (105) pour contourner l'amplificateur à haute fréquence (102) ;
le premier commutateur de signal (103) étant réalisé pour la commutation entre l'amplificateur à haute fréquence (102) et la première ligne de détour.

5. Utilisation du module électronique pour la mesure de niveau selon l'une des revendications précédentes, le module électronique comprenant en outre :
une seconde ligne de détour (406) ;
un troisième commutateur de signal (403) pour la commutation entre la première ligne de détour (105) et la seconde ligne de détour (406).

6. Utilisation du module électronique pour la mesure de niveau selon l'une des revendications précédentes, le module électronique comprenant en outre :
un élément d'affaiblissement (110), disposé dans la première ligne de détour (105) ou dans la seconde ligne de détour (406).

7. Utilisation du module électronique pour la mesure de niveau selon l'une des revendications précédentes,
l'amplificateur à haute fréquence (102) étant réalisé pour l'amplification du signal émetteur avec une amplification contrôlable.

8. Utilisation du module électronique pour la mesure de niveau selon l'une des revendications précédentes, le module électronique comprenant en outre :
une unité de commande (111) pour le contrôle des commutateurs de signaux (103, 104, 403, 404), de l'affaiblissement de l'élément d'affaiblissement ou de l'amplification de l'amplificateur à haute fréquence (102).

9. Procédé de modification d'une puissance d'émission d'un signal émetteur, mis en oeuvre pour la mesure de niveau, le procédé comprenant les étapes :
génération du signal émetteur d'une fréquence de plus de 20 GHz ;
amplification de la puissance d'émission du signal émetteur à une puissance d'émission amplifiée par un amplificateur à haute fréquence ;
commutation du signal émetteur, après sa génération, de la puissance d'émission amplifiée à une seconde puissance d'émission, plus faible, par déconnexion d'une tension de drain de l'amplificateur à haute fréquence en présence d'une tension de grille connectée.

10. Elément de programme qui, lorsqu'il est exécuté sur un processeur d'un radar de niveau, donne l'ordre à ce dernier de mettre en oeuvre le procédé selon la revendication 9.

11. Support lisible par ordinateur, sur lequel est mémorisé l'élément de programme selon la revendication 10.
